Europäisches Patentamt

European Patent Office

Office européen des brevets

(11) Publication number: **0 078 348**
**B1**

(12) **EUROPEAN PATENT SPECIFICATION**

(45) Date of publication of patent specification: **05.03.86**

(51) Int. Cl.⁴: **B 62 D 33/06**

(21) Application number: **81201325.8**

(22) Date of filing: **03.12.81**

(54) **A device for tilting a vehicle cabin from and into the drive position.**

(30) Priority: **29.10.81 US 316369**

(43) Date of publication of application:
**11.05.83 Bulletin 83/19**

(45) Publication of the grant of the patent:
**05.03.86 Bulletin 86/10**

(84) Designated Contracting States:
**DE FR IT NL SE**

(56) References cited:
**FR-A-2 185 306**
**FR-A-2 203 343**
**FR-A-2 481 220**
**GB-A-1 273 861**
**GB-A-1 421 959**
**US-A-3 667 566**
**US-A-3 847 244**

(73) Proprietor: **Applied Power Inc.**
**250 Executive Drive**
**Brookfield Wisconsin 53005 (US)**

(72) Inventor: **Eichelsheim, Alexander Victor**
**Helmkruit 30**
**Oldenzaal (NL)**

(74) Representative: **Boelsma, Gerben Harm, Ir.**
**Octrooibureau Polak & Charlouis Laan Copes**
**van Cattenburch 80**
**NL-2585 GD Den Haag (NL)**

Courier Press, Leamington Spa, England.

## Description

The invention relates to a device for tilting a vehicle cabin from and into the drive position, comprising at least one double acting hydraulic piston cylinder device (1) forming a hydraulic circuit together with a pump (9), a reservoir (10) for the hydraulic fluid and a control valve (8), both ends of said piston cylinder device (1) being pivotally connected to the cabin and the vehicle chassis respectively, there being further provided a locking means for locking the cabin in the drive position, said locking means (29, 32) cooperating with a valve means (19) likewise connected in the hydraulic circuit, said valve means having two positions corresponding with the inoperative and the operative position respectively of the locking means, in which positions the valve means (17) permits or precludes respectively the supply of the full operating pressure to the piston cylinder device (1).

Such a device is known from DE—A—22 24 383.

In this known device the valve means is provided in the feed circuit between the hydraulic control valve and the cylinder space below the tilting piston. The valve means is constituted by the piston of a single acting hydraulic cylinder. The cylinder space at one side of the piston is connected to the pump through the control valve, a spring acting on the other side of the piston and tending to move the piston towards its position corresponding with the operative (locking) position of the locking means. In this latter position the piston closes a port (32) provided in the cylinder wall of the piston cylinder device so that no pressurized hydraulic fluid can be supplied to the space under the piston of the hydraulic tilting device. Thereby it is prevented that the cabin is loaded in the tilting direction while it is still locked in the drive position. Feeding the hydraulic tilting device only takes place after the piston has been moved towards its position corresponding with the inoperative position of the locking means, under the influence of the feed pressure acting on the piston against the spring influence, in which position the cylinder port (32) towards the hydraulic tilting device is uncovered.

The device according to the invention differs from said known device in that the valve means (17) has such dimensions that in normal unblocked condition of the locking means (29, 32) it is permitted to already assume its position corresponding with the inoperative position of the locking means under the influence of a fluid pressure below the full pressure for operating the piston cylinder device (1, 1') for tilting the cab, the valve means (17) having a vent channel (20) which communicates (21, 22) with the reservoir (10) in the valve (17) position corresponding with the operative position of the locking means (29, 32), but which is closed until the pressure on the valve (17) exceeds a pressure which is a little higher than the said pressure below the valve tilting operation pressure.

By the measures according to the invention the device has become essentially safer and more reliable. If namely in the device according to the invention the locking means through any cause blocks in its operative locking position when it is desired to tilt the cabin from the drive position, the pressure generated in the feed conduit in any case cannot rise above the value at which the valve means normally enters its position corresponding with the inoperative position of the locking means. Namely, as soon as said lower pressure tends to be exceeded the vent channel opens and the hydraulic liquid delivered by the pump returns to the reservoir through this channel. In comparison therewith the pressure in the feed conduit of the known device will mount, in case its locking means blocks in its operative position, to above the full operating pressure which is necessary for actuating the hydraulic tilting device.

A preferably used embodiment of the device according to the invention is characterized in that the valve means is connected in a conduit which communicates a point in the feed conduit to the cylinder space under the piston of the piston cylinder device, situated downstream of the control valve, with the reservoir.

This embodiment is particularly suitable in those cases in which a hydraulic piston-cylinder device with locking means is used at both sides of the cabin. By the parallel circuit of the valve means which is characteristic for this embodiment (instead of the series circuit in the known device) the feature is achieved that hydraulic liquid is only supplied to the cylinder space under the pistons of both tilting devices if both locking means have arrived in their inoperative position.

The invention will be further illustrated below with reference to the drawing of an embodiment given as example.

Fig. 1 shows a diagram of the device according to the invention;

Fig. 2 shows a section through the valve means in its position corresponding with the operative position of the locking means and

Fig. 3A and 3B show an example of the locking means in its operative and inoperative position respectively.

Reference number 1 is a double acting hydraulic piston cylinder device comprising a piston 2, the piston rod 3 of which is pivotably connected through an eye 4 with the tilting cabin not further shown. The cylinder is pivotably connected in known manner at its end remote from the eye 4 with the vehicle chassis. The cylinder space 5 under the piston 2 is connected with the pressure side of the e.g. manually actuatable pump 9 through a conduit 6 having a check valve 7 and a hydraulic control slide 8. The hydraulic fluid may be sucked from the reservoir 10 through the pump 9. A relief valve 11 connected in parallel to the pump 9 limits the pressure of the hydraulic fluid supplied by the pump to a predetermined value higher than the pressure which is necessary for actuating the hydraulic piston cylinder device 1.

In the position shown of the control valve 8 the space 12 above the piston 2 communicates through a conduit 13 and the control valve 8 likewise with the pump 9. In the position shown of the control valve 8 thereby hydraulic fluid is supplied to the cylinder above the piston 2 as well as below that piston when the pump 9 is actuated. Since the operative piston area at the under side is larger that at the side of the cylinder space 12, the piston 2 tends to move upwardly and this causes in known manner the tilting of the cabin from the drive position.

In order to be able to return the cabin from the tilted position to the drive position, the control valve 8 must be moved downwardly from the position shown in the drawing.

Thereafter the conduit 6 is cut off from the pump 9 and is communicated with the discharge conduit 14 towards the reservoir 10. The conduit 13 and therefore the upper cylinder space 12 remains in communication with the pump 9 while through a branch 13′ of the conduit 13 pressure is supplied to the valve 7 such that said valve is kept in the open position so that hydraulic liquid from the space 5 under the piston 2 may return to the reservoir 10 via the valve 7, the conduit 6, the control valve 8 and the conduit 14, so that the piston 2 is permitted to move downwardly in the cylinder.

So far the device shown is of a known type as e.g. described in the Dutch patent application 7215364.

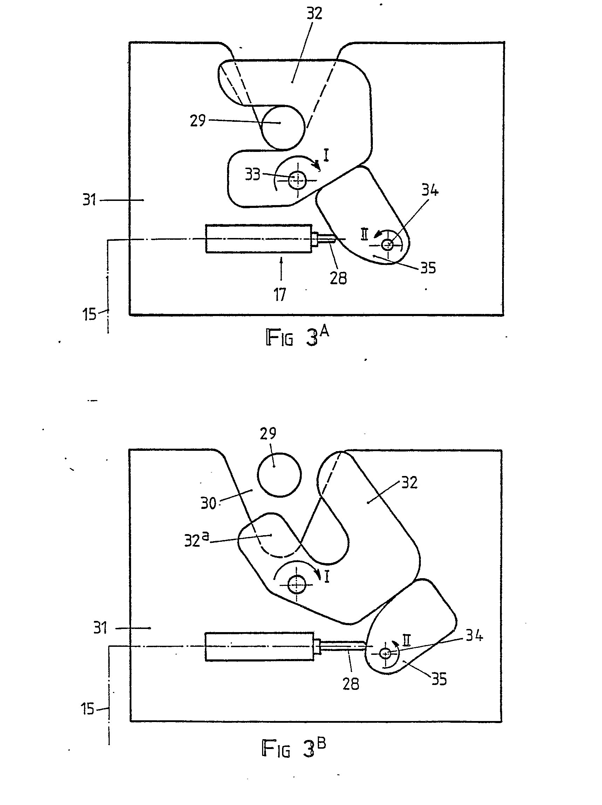

According to the invention a conduit 15 is provided in parallel to the pump 9 and the hydraulic control valve 8. Said conduit connects a point 16 of the conduit 6, situated downstream of the control valve 8, with the reservoir 10. The safety valve device indicated 17 is connected in the conduit 15, said safety device cooperating with the locking means shown in Figures 3A—3B, by means of which the cabin may be locked in the drive position.

Like in the known device two functions have been combined into the safety valve device 17 according to the invention, namely that of the safety valve and that of the locking or unlocking device respectively. Thereto the valve device has the embodiment of a single acting hydraulic piston cylinder device, the piston or plunger 18 thereof being on the one hand under the influence of the pressure of the hydraulic liquid delivered by the pump, while on the other hand a spring 19 acts thereon.

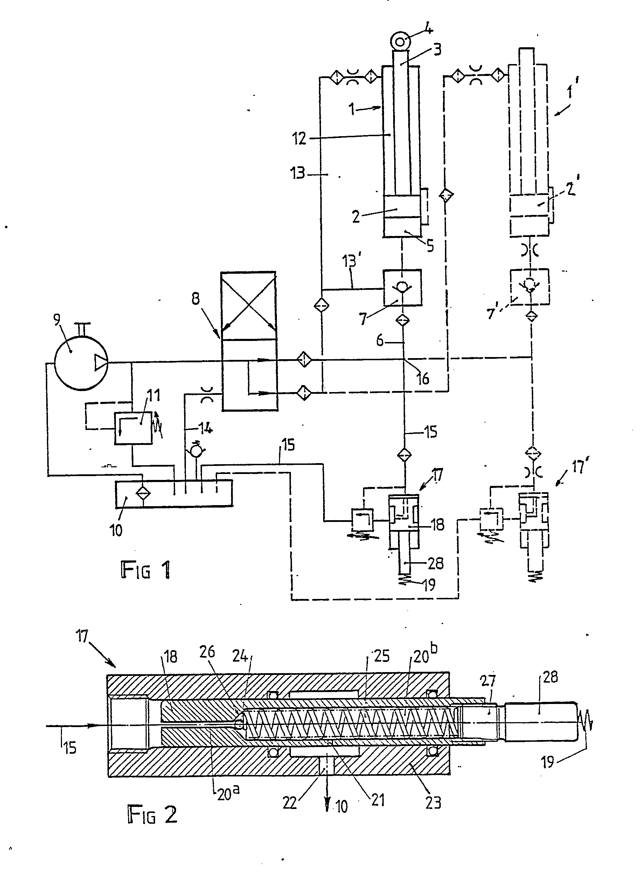

In Fig. 1 and 2 the safety valve device 17 is in its position corresponding with the operative locking position. In this position a vent channel 20 present in the retracted plunger 18 of the valve means communicates through a radial aperture 21 in the plunger body and a radial aperture 22 in the valve body 23 with the reservoir 10. The vent channel 20 is normally closed by a ball valve 24 which is biased by a spring 25 in upstream direction in engagement with a conical seat 26 (see Fig. 2). The seat 26 has been formed at the transition point between a narrow portion 20a and a wider portion 20b of the vent channel 20. The spring 25 is received in the wider channel portion 20b which is closed at the right end by a plug 27. The plug 27 is integral with a pressure rod 28, the purpose of which will be explained below.

In Fig. 3A and 3B a horiztonal pin has been indicated by the reference number 29, which pin is secured to the cabin not shown spaced from the tilting shaft. In the drive position said pin is received in a recess 30 in a part 31 of the vehicle chassis. In the position according to Fig. 3A the pin 29 is locked against leaving the recess 30 by a locking hook 32 which is connected to the chassis part 31 pivotable around a shaft 33. A spring (not shown) tends to rotate the locking hook 32 in the direction of arrow I into the non-operative position. In the position according to Fig. 3A, however, this is prevented by a pawl 35 rotatable around an axis 34, said pawl being biased by the spring 19, not shown in Fig. 3A, B, into the direction of arrow II. The pawl 35 cooperates with the pressure rod 28 of the safety valve device 17. In Fig. 3A the pressure rod 28 is in its retracted position.

If now, while the cabin (not shown) is in its drive position, the control valve 8 is placed in the position for tilting, the tilting will only take place after the locking means has arrived from its operative position according to Fig. 3A in its inoperative position according to Fig. 3B. Under normal conditions, that is with a correctly functioning locking means, the hydraulic liquid delivered by the pump 9 will move the plunger 18 of the valve device 17 from the position shown in the drawing to the right, namely at a pressure which is considerably lower than the pressure which is necessary for actuating the tilting device. The tension of the spring 25 has been adjusted to said lower pressure. The pawl is rotated by the pressure rod 28 moving together with the plunger 18 to the right, against the pressure of the spring 19 towards the position according to Fig. 3B. Thereby the locking hook 32 is deblocked and is permitted to rotate to the right under the influence of the spring acting on it and to enter its open position according to Fig. 3B. The pin 29 may now leave its recess 30.

When the plunger 18 moves to the right the connection with the reservoir 10 will be broken, as will be clear. From this moment the pressure in the feed conduit 15 further rises until above the pressure under the influence of which the plunger 18 has moved. The valve 24 then opens but, due to the fact that the connection with the reservoir has been broken, this will not result in a decrease of the pressure in the conduit 15. As soon as the pressure in the conduit 15 has reached the full operating pressure the piston 2 will start moving in upward direction and thereby the cabin is tilted.

If, however, by any cause the locking means remains blocked in its operative position, in that the plunger 18 remains in its position as shown in Fig. 2, the ball valve 24 will open and will act as vent or relief means since, of course, the connection with the reservoir 10 is maintained. In that case the liquid delivered by the pump 9 will not reach the pressure value which is necessary for actuating the piston cylinder device 1, 2 and will be pumped back to the reservoir with a pressure which is little higher than that at which under normal conditions the plunger 18 is moved to its inoperative position.

In Fig. 1 a second piston device 1', 2' with corresponding safety valve device 17' is shown with broken lines. Therewith the case is illustrated in which a tilting device with corresponding locking means is used at both sides of the vehicle.

It will be clear that in this case the supply of hydraulic liquid under the full operating pressure to both piston cylinder devices fails to turn up until the moment in which the plungers of both safety valve devices 17 and 17' have been moved outwardly.

Tilting back of the cabin to the drive position takes place while the locking means is in its position indicated in Fig. 3B. Then no pressure acts on the plunger 18. In the end phase of the return tilting movement the pin 29 enters into contact with the portion 32a of the locking hook during its downward movement, which hook thereby is rotated to the left against the influence of the spring acting thereon. The cabin thereby locks itself while the pawl is rotated in the direction of arrow II under the influence of the spring 19 so that the locking means arrives at the position according to Fig. 3A.

## Claims

1. A device for tilting a vehicle cabin from and into the drive position, comprising at least one double acting hydraulic piston cylinder device (1) forming a hydraulic circuit together with a pump (9), a reservoir (10) for the hydraulic fluid and a control valve (8), both ends of said piston cylinder device (1) being pivotally connected to the cabin and the vehicle chassis respectively, there being further provided a locking means for locking the cabin in the drive position, said locking means (29, 32) cooperating with a valve means (17) likewise connected in the hydraulic circuit, said valve means having two positions corresponding with the inoperative and the operative position respectively of the locking means, in which positions the valve means (17) permits or precludes respectively the supply of the full operating pressure to the piston cylinder device (1), characterized in that the valve means (17) has such dimensions that in normal unblocked condition of the locking means (29, 32) it is permitted to already assume its position corresponding with the inoperative position of the locking means under the influence of a fluid pressure below the full pressure for operating the piston cylinder device (1, 1') for tilting the cab, the valve means (17) having a vent channel (20) which communicates (21, 22) with the reservoir (10) in the valve (17) position corresponding with the operative position of the locking means (29, 32), but which is closed until the pressure on the valve (17) exceeds a pressure which is a little higher than the said pressure below the valve tilting operating pressure.

2. A device according to claim 1, characterized in that the valve means (17) is connected in a conduit (15) which connects a point in the feed conduit towards the cylinder space (5) under the piston (2) of the piston cylinder device (1), situated downstream of the control valve (8), with the reservoir (10).

## Revendications

1. Dispositif pour le basculement de la cabine d'un véhicule de et vers la position de marche, comprenant au moins un vérin hydraulique (1) à double effet formant un circuit hydraulique en combinaison avec une pompe (9), un réservoir (10) pour le fluide hydraulique et une soupape (8) de commande, les deux extrémités dudit vérin (1) étant articulées à la cabine respectivement au chassis du véhicule, un organe de verrouillage étant prévu pour le verrouillage de la cabine dans la position de marche, ledit organe (29, 32) de verrouillage coopérant avec un dispositif de soupape (17) également relié dans le circuit hydraulique, ledit dispositif de soupape ayant deux positions correspondant à la position inopérative respectivement la position opérative de l'organe de verrouillage, dans lesquelles positions le dispositif de soupape (17) permettant òu respectivement prévenant l'amenée de la pression voulue pour opérer le vérin (1), caractérisé en ce que le dispositif de soupape (17) a de telles dimensions qu'il est permis dans la condition normale non-adhérant de l'organe (29, 32) de verrouillage de déjà occuper sa position correspondant à la position inopérative de l'organe de verrouillage sous l'influence d'une pression de fluide plus petite que la pression voulue pour opérer le vérin (1, 1') pour le basculement de la cabine, le dispositif (17) de soupape ayant un canal (20) de ventilation communiquant (21, 22) avec le réservoir (10) dans la position de la soupape (17) correspondant à la position opérative de l'organe (29, 32) de verrouillage, mais lequel canal est clos jusqu'au moment que la pression sur la soupape (17) dépasse une pression ayant une valeur qui est un peu plus que ladite pression étant plus pétite que la pression opérative pour le basculement.

2. Dispositif selon le revendication 1, caractérisé en ce que le dispositif de soupape (17) est relié à une conduite (15) communiquant un point dans la conduite d'amenée vers le volume (5) du cilindre en dessous du piston (2) du vérin (1), situé en aval de la soupape (8) de commande, avec le réservoir (10).

## Patentansprüche

1. Kippvorrichtung für das Fahrerhaus eines Fahrzeugs aus der und in die Fahrlage, bestehend aus wenigstens einer doppeltwirkenden hydraulischen Kolben-Zylinder-Vorrichtung (1) welche einen hydraulischen Kringlauf bildet zusammen mit einer Pumpe (9), einem Reservoir (10) für das hydraulische Fluidum und einem Steuerventil (8), bei welcher die beiden Ende dieser Kolben-Zylinder-Vorrichtung (1) schwenkbar mit dem Fahrerhaus bezw. mit dem Fahrzeugrahmen verbunden sind, wobei weiter ein Verriegelorgan zum Verriegeln des Fahrerhauses in der Fahrlage vorgesehen ist, welches Verriegelorgan (29, 32) mit einer Ventilvorrichtung (17) zusammenarbeitet, welche ebenfalls im hydraulischen Kringlauf aufgenommen ist, welche Ventilvorrichtung zwei Lagen aufweist, welche der unwirksamen bezw. der wirksamen Lage des Verriegelorgans entsprechen, in welchen Lagen die Ventilvorrichtung (17) die Zufuhr des vollen Arbeitsdruckes zur Kolben-Zylinder-Vorrichtung (1) zulässt bezw. verhindert, dadurch gekennzeichnet dass die Ventilvorrichtung (17) solche Abmessungen aufweist dass in der normalen nicht-festsitzenden Lage des Verriegelorgans (29, 32) diese Ventilvorrichtung in der Lage ist bereits ihre der unwirksamen Lage des Verriegelorgans entsprechenden Lage einzunehmen unter der Einwirkung eines Fluidumdruckes welcher niedriger ist als der volle Druck zur Bedienung der Kolben-Zylinder-Vorrichtung (1, 1') zum Kippen des Fahrerhauses, welche Ventilvorrichtung (17) ein Entlüftungskanal (20) aufweist welches mit dem Reservoir (10) verbunden ist (21, 22) in der Lage des Ventils (17) welche der wirksamen Lage des Verriegelorgans (29, 32) entspricht, aber welches Kanal geschlossen ist bis der Druck auf das Ventil (17) einen Druck überschreitet welcher ein wenig höher ist als der genannte Druck, welcher niedriger ist als der Kippbedienungsdruck des Ventils.

2. Vorrichtung nach Anspruch 1, dadurch gekennzeichnet dass die Ventilvorrichtung (17) in einer Leitung (15) aufgenommen ist, welche einen Punkt in der Zufuhrleitung zum Zylinderraum (5) unterhalb des Kolbens (2) der Kolben-Zylinder-Vorrichtung (1), stromabwärts vom Steuerventil (8) gelegen, mit dem Reservoir (10) verbindet.

Fig 1

Fig 2

FIG 3^A

FIG 3^B

2